# EUROPEAN PATENT APPLICATION

(11) **EP 4 241 880 A1**
(43) Date of publication of application: **13.09.2023**
(21) Application number: 21889051.5
(22) Date of filing: 21.10.2021
(51) Int. Cl.: B01J 35/04, B01D 53/94, B01J 27/053, F01N 3/10, F01N 3/28

(54) **EXHAUST GAS PURIFICATION CATALYST DEVICE**

(30) Priority: 06.11.2020 JP 2020185568
(71) Applicant: CATALER CORPORATION, Kakegawa-shi, Shizuoka 437-1492 (JP)
(72) Inventor: HIRAO, Tetsuhiro, Kakegawa-shi, Shizuoka 437-1492 (JP); TODA, Yosuke, Kakegawa-shi, Shizuoka 437-1492 (JP); SAITO, Daiki, Kakegawa-shi, Shizuoka 437-1492 (JP)
(74) Representative: Ricker, Mathias
(86) International application number: PCT/JP2021/038987
(87) International publication number: WO 2022/097498

(57) **Abstract**

The present invention provides an exhaust gas purification catalyst device having a base material 110, an upstream-side lower coat layer 121, an upstream-side upper coat layer 122, a downstream-side lower coat layer 131, and a downstream-side upper coat layer 132, the exhaust gas purification catalyst device satisfying conditions (i) and (ii). (i) The concentration of Pt and/or Pd in the upstream-side upper coat layer 122 and the downstream-side lower coat layer 131 is greater than the concentration of Pt and/or Pd in the upstream-side lower coat layer 121, and is greater than the concentration of Pt and/or Pd in the downstream-side upper coat layer 132. (ii) The concentration of Rh in the upstream-side lower coat layer 121 and the downstream-side upper coat layer 132 is greater than the concentration of Rh in the upstream-side upper coat layer 122, and is greater than the concentration of Rh in the downstream-side lower coat layer 131.

## Description

### FIELD

The present invention relates to an exhaust gas purification catalyst device.

### BACKGROUND

Exhaust gas from internal combustion engines such as automobile engines contain nitrogen oxides (NO_{X}), carbon monoxide (CO) and hydrocarbons (HC). Such exhaust gas is purified by exhaust gas purifying catalysts that oxidize CO and HC and reduce NOx before they are released into the air.

To reduce air pollution, the three main components in exhaust gas, CO, HC and NOx, are regulated by various countries in terms of discharge weight per unit of automobile traveling distance.

Exhaust gas regulations are becoming stricter year by year. Currently applied regulations include LEV III regulations in the U.S. and Euro 6 regulations in Europe. Europe is expected to shift to Euro 7 regulations in the near future.

In light of these circumstances, PTL 1, for example, describes a layered catalyst composite device that includes a substrate, a first layer containing Pd accumulated on the substrate, a second layer containing Rh accumulated on the first layer and a third layer containing Pd accumulated on the second layer, wherein the third layer is accumulated only on the upstream side of the substrate, forming a high-Pd-content region.

### [CITATION LIST]

### [PATENT LITERATURE]

[PTL 1] Japanese Patent Public Inspection No. 2010-501337

### SUMMARY

### [TECHNICAL PROBLEM]

The test mode used for the regulations mentioned above is an operating mode which includes cold starting, since it is considered urgent to achieve high reduction in both the HC emission when cold (cold HC) and NOx emission when hot (hot NOx).

Cold HC constitutes the larger part of total emissions, and therefore PTL 1 proposes an exhaust gas purification catalyst device designed with focus on reducing cold HC.

However, with exhaust gas purification catalyst devices of the prior art, including the layered catalyst composite device described in PTL 1, the reduction in hot NOx and the reduction in cold HC have both been insufficient.

It is an object of the present invention to provide an exhaust gas purification catalyst device having a high level of both reduction in hot NOx and reduction in cold HC.

### [SOLUTION TO PROBLEM]

The present invention is as follows.

<Aspect 1> An exhaust gas purification catalyst device comprising a substrate and a catalyst coating layer on the substrate, wherein:
   the catalyst coating layer has an upstream side coating layer disposed on the exhaust gas flow upstream side and a downstream side coating layer disposed on the exhaust gas flow downstream side,
   the upstream side coating layer has an upstream side lower coating layer disposed on the substrate and an upstream side upper coating layer disposed on the upstream side lower coating layer and
   the downstream side coating layer has a downstream side lower coating layer disposed on the substrate and a downstream side upper coating layer disposed on the downstream side lower coating layer,
   the upstream side lower coating layer, the upstream side upper coating layer, the downstream side lower coating layer and the downstream side upper coating layer each include a precious metal catalyst selected from among Pt, Pd and Rh,
   and the exhaust gas purification catalyst device satisfying both of the following conditions (i) and (ii):
      (i) the concentrations of either or both Pt and Pd in the upstream side upper coating layer and the downstream side lower coating layer are:
         higher than the concentrations of either or both Pt and Pd in the upstream side lower coating layer, and
         higher than the concentrations of either or both Pt and Pd in the downstream side upper coating layer; and
      (ii) the concentrations of Rh in the upstream side lower coating layer and downstream side upper coating layer are:
         higher than the concentration of Rh in the upstream side upper coating layer, and
         higher than the concentration of Rh in the downstream side lower coating layer.
<Aspect 2> The exhaust gas purification catalyst device according to mode 1, wherein:
   at least the downstream side lower coating layer contains ceria, and
   the concentration of ceria in the upstream side lower coating layer, the concentration of ceria in the upstream side upper coating layer and the concentration of ceria in the downstream side upper coating layer are all 70% or less of the concentration of ceria in the downstream side lower coating layer.
<Aspect 3> The exhaust gas purification catalyst device according to aspect 1 or 2, wherein:
   the amount of ceria in the upstream side lower coating layer is 10 g/L or lower per 1 L of the upstream side lower coating layer-forming part of the substrate, and
   the amount of ceria in the downstream side upper coating layer is 10 g/L or lower per 1 L of the downstream side upper coating layer-forming part of the substrate.
<Aspect 4> The exhaust gas purification catalyst device according to any one of modes 1 to 3, wherein:
   the upstream side upper coating layer and the downstream side lower coating layer each include Pd,
   the amount of Pd in the upstream side upper coating layer per 1 L of the upstream side upper coating layer-forming part of the substrate
   is at least 2.0 times the amount of Pd in the downstream side lower coating layer per 1 L of the downstream side lower coating layer-forming part of the substrate.
<Aspect 5> The exhaust gas purification catalyst device according to any one of aspects 1 to 4, wherein the total length of the upstream side lower coating layer and the downstream side upper coating layer is at least 80% of the length of the substrate.
<Aspect 6> The exhaust gas purification catalyst device according to any one of aspects 1 to 5, wherein near the edges on the exhaust gas flow upstream side, the upstream side upper coating layer has no region that is directly disposed on the substrate without contacting the upstream side lower coating layer.
<Aspect 7> The exhaust gas purification catalyst device according to any one of aspects 1 to 6, wherein the length of the upstream side coating layer is 20% to 50% of the length of the substrate.
<Aspect 8> The exhaust gas purification catalyst device according to any one of aspects 1 to 7, wherein the coating amount of the upstream side coating layer is 240 g/L or lower per 1 L of the upstream side coating layer-forming part of the substrate.
<Aspect 9> The exhaust gas purification catalyst device according to any one of aspects 1 to 8, wherein the coating amount of the upstream side upper coating layer is 160 g/L or lower per 1 L of the upstream side upper coating layer-forming part of the substrate.

### [ADVANTAGEOUS EFFECTS OF INVENTION]

According to the present invention there is provided an exhaust gas purification catalyst device having a high level of both reduction in hot NOx and reduction in cold HC.

### BRIEF DESCRIPTION OF DRAWINGS

Fig. 1 is a schematic diagram showing an example of the construction of an exhaust gas purification catalyst device of the invention.
Fig. 2 is a schematic diagram showing another example of the construction of an exhaust gas purification catalyst device of the invention.
Fig. 3 is a schematic diagram showing yet another example of the construction of an exhaust gas purification catalyst device of the invention.
Fig. 4 is a schematic diagram showing yet another example of the construction of an exhaust gas purification catalyst device of the invention.
Fig. 5 is set of schematic diagrams showing the constructions of the exhaust gas purification catalyst devices produced in Example 1 and Comparative Examples 1 to 5.
Fig. 6 is a set of schematic diagrams showing the constructions of the exhaust gas purification catalyst devices produced in Examples 1, 9 and 10.
Fig. 7 is a set of schematic diagrams showing the constructions of the exhaust gas purification catalyst devices produced in Examples 11 to 16.

### DESCRIPTION OF EMBODIMENTS

The exhaust gas purification catalyst device of the invention is an exhaust gas purification catalyst device comprising a substrate and a catalyst coating layer on the substrate, wherein:
the catalyst coating layer has an upstream side coating layer disposed on the exhaust gas flow upstream side and a downstream side coating layer disposed on the exhaust gas flow downstream side,
the upstream side coating layer has an upstream side lower coating layer disposed on the substrate and an upstream side upper coating layer disposed on the upstream side lower coating layer and
the downstream side coating layer has a downstream side lower coating layer disposed on the substrate and a downstream side upper coating layer disposed on the downstream side lower coating layer,
the upstream side lower coating layer, the upstream side upper coating layer, the downstream side lower coating layer and the downstream side upper coating layer each include a precious metal catalyst selected from among Pt, Pd and Rh,
and the exhaust gas purification catalyst device satisfying both of the following conditions (i) and (ii):
   (i) the concentrations of either or both Pt and Pd in the upstream side upper coating layer and the downstream side lower coating layer are:
      higher than the concentrations of either or both Pt and Pd in the upstream side lower coating layer, and
      higher than the concentrations of either or both Pt and Pd in the downstream side upper coating layer; and
   (ii) the concentrations of Rh in the upstream side lower coating layer and downstream side upper coating layer are:
      higher than the concentration of Rh in the upstream side upper coating layer, and
      higher than the concentration of Rh in the downstream side lower coating layer.

A typical construction for the exhaust gas purification catalyst device of the invention will now be described with reference to the accompanying drawings.

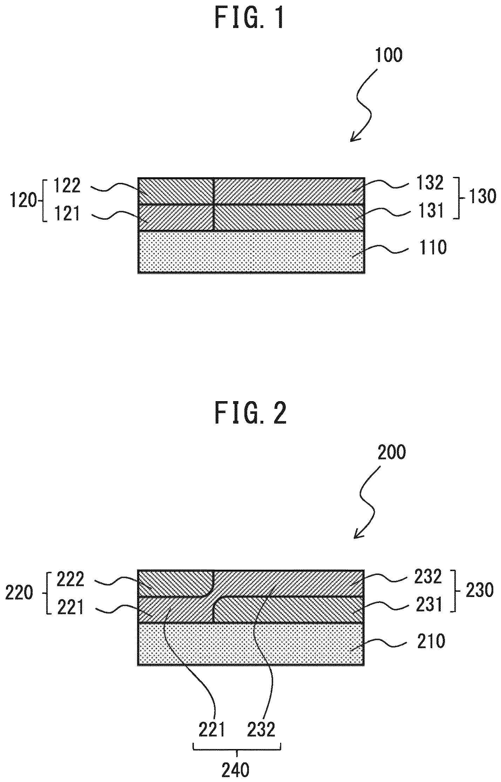

Fig. 1 to Fig. 4 are schematic diagrams each showing an example of the construction of an exhaust gas purification catalyst device of the invention.

The exhaust gas purification catalyst device (100) of Fig. 1 is an exhaust gas purification catalyst device comprising a substrate (110) and a catalyst coating layer on the substrate (110). The catalyst coating layer of the exhaust gas purification catalyst device (100) has an upstream side coating layer (120), disposed on the exhaust gas flow upstream side, and a downstream side coating layer (130), disposed on the exhaust gas flow downstream side.

The upstream side coating layer has an upstream side lower coating layer (121), disposed on the substrate (110), and an upstream side upper coating layer (122), disposed on the upstream side lower coating layer (121). The downstream side coating layer has a downstream side lower coating layer (131), disposed on the substrate (110), and a downstream side upper coating layer (132), disposed on the downstream side lower coating layer (131).

The upstream side lower coating layer (121), upstream side upper coating layer (122), downstream side lower coating layer (131) and downstream side upper coating layer (132) each include a precious metal catalyst selected from among Pt, Pd and Rh.

The exhaust gas purification catalyst device (100) also satisfies both of the following (i) and (ii):
(i) the concentrations of either or both Pt and Pd in the upstream side upper coating layer (122) and the downstream side lower coating layer (131)
   are higher than the concentrations of either or both Pt and Pd in the upstream side lower coating layer (121), and
   higher than the concentrations of either or both Pt and Pd in the downstream side upper coating layer (132); and
(ii) the concentrations of Rh in the upstream side lower coating layer (121) and downstream side upper coating layer (132) are both:
   higher than the concentration of Rh in the upstream side upper coating layer (122) and
   higher than the concentration of Rh in the downstream side lower coating layer (131).

The conditions (i) and (ii) indicate that:
in the upstream side coating layer, the upper layer includes either or both Pt and Pd at high concentration and the lower layer includes Rh at high concentration, and
in the downstream side coating layer, the upper layer includes Rh at high concentration and the lower layer includes either or both Pt and Pd at high concentration.

The exhaust gas purification catalyst device (100) of Fig. 1 having this construction is able to provide high levels of both reduction in hot NOx and reduction in cold HC.

Specifically, a precious metal catalyst of either or both Pt and Pd is included at high concentration in the upper layer of the upstream side coating layer where the exhaust gas flow is most rapidly warmed. Oxidizing purification of HC is therefore promoted, greatly reducing cold HC. Rh is also included at high concentration in the lower layer of the upstream side coating layer. Since reduction reaction by Rh in the lower layer is therefore also promoted with oxidation reaction by the precious metal catalyst of the upper layer of the upstream side coating layer, the overall action of the three-way catalyst can be promoted, thus assisting in reducing cold HC to further reduce cold HC.

At the downstream side coating layer, however, Rh is included at high concentration on the upper layer that tends to contact with exhaust gas. This allows hot NOx to be efficiently reduced. In the lower layer of the downstream side coating layer, either or both Pt and Pd precious metal catalysts are present at high concentration, thereby helping to reduce hot HC.

The exhaust gas purification catalyst device (200) shown in Fig. 2 is another construction example of the exhaust gas purification catalyst device of the invention.

The exhaust gas purification catalyst device (200) of Fig. 2 is the same as the exhaust gas purification catalyst device (100) of Fig. 1 in that:
it has a substrate (210) and a catalyst coating layer on the substrate (210);
the catalyst coating layer has an upstream side coating layer (220) disposed on the exhaust gas flow upstream side and a downstream side coating layer (230) disposed on the exhaust gas flow downstream side;
the upstream side coating layer has an upstream side lower coating layer (221) disposed on the substrate (210) and an upstream side upper coating layer (222) disposed on the upstream side lower coating layer (221); and
the downstream side coating layer has a downstream side lower coating layer (231) disposed on the substrate (210) and a downstream side upper coating layer (232) disposed on the downstream side lower coating layer (231); and
also in terms of the types and concentration ratios of precious metal catalysts in each coating layer.

In the exhaust gas purification catalyst device (200) of Fig. 2, however, the upstream side lower coating layer (221) and the downstream side upper coating layer (232) are connected in an integral manner to form a Rh layer (240) in a continuous manner in the direction of exhaust gas flow.

In this exhaust gas purification catalyst device (200) as well,
at the upstream side coating layer, either or both Pt and Pd are included as precious metal catalysts in the upper layer and Rh is included at high concentration in the lower layer; and
at the downstream side coating layer, Rh is included at high concentration in the upper layer while either or both Pt and Pd precious metal catalysts are included at high concentration in the lower layer.

Therefore, the exhaust gas purification catalyst device (200) of Fig. 2 significantly reduces cold HC, promotes three-way catalyst action and reduces hot NOx and hot HC, by the same mechanism as the exhaust gas purification catalyst device (100) of Fig. 1.

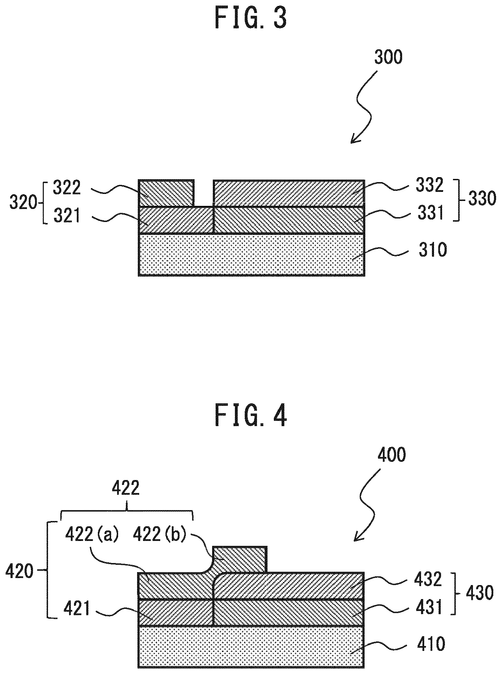

The exhaust gas purification catalyst device (300) shown in Fig. 3 is yet another construction example of the exhaust gas purification catalyst device of the invention.

The exhaust gas purification catalyst device (300) of Fig. 3 is the same as the exhaust gas purification catalyst device (100) of Fig. 1 in that:
it has a substrate (310) and a catalyst coating layer on the substrate (310);
the catalyst coating layer has an upstream side coating layer (320) disposed on the exhaust gas flow upstream side and a downstream side coating layer (330) disposed on the exhaust gas flow downstream side;
the upstream side coating layer has an upstream side lower coating layer (321) disposed on the substrate (310) and an upstream side upper coating layer (322) disposed on the upstream side lower coating layer (321); and
the downstream side coating layer has a downstream side lower coating layer (331) disposed on the substrate (310) and a downstream side upper coating layer (332) disposed on the downstream side lower coating layer (331); and
also in terms of the types and concentration ratios of precious metal catalysts in each coating layer.

In the exhaust gas purification catalyst device (300) of Fig. 3, therefore, the length of the upstream side upper coating layer (322) and the length of the upstream side lower coating layer (321) are different. Specifically, the length of the upstream side upper coating layer (322) is shorter than the length of the upstream side lower coating layer (321), and the construction is consequently such that a portion of the upstream side lower coating layer (321) directly contacts with exhaust gas.

In this exhaust gas purification catalyst device (300) as well,
at the upstream side coating layer, either or both Pt and Pd are included as precious metal catalysts in the upper layer while Rh is included at high concentration in the lower layer; and
at the downstream side coating layer, Rh is included at high concentration in the upper layer while either or both Pt and Pd precious metal catalysts are included at high concentration in the lower layer.

Therefore, the exhaust gas purification catalyst device (300) of Fig. 3 significantly reduces cold HC, promotes three-way catalyst action and reduces hot NOx and hot HC, by the same mechanism as the exhaust gas purification catalyst device (100) of Fig. 1.

The exhaust gas purification catalyst device (400) shown in Fig. 4 is yet another construction example of the exhaust gas purification catalyst device of the invention.

The exhaust gas purification catalyst device (400) of Fig. 4 is the same as the exhaust gas purification catalyst device (100) of Fig. 1 in that:
it has a substrate (410) and a catalyst coating layer on the substrate (410);
the catalyst coating layer has an upstream side coating layer (420) disposed on the exhaust gas flow upstream side and a downstream side coating layer (430) disposed on the exhaust gas flow downstream side;
the upstream side coating layer has an upstream side lower coating layer (421) disposed on the substrate (410); and
the downstream side coating layer has a downstream side lower coating layer (431) disposed on the substrate (410) and a downstream side upper coating layer (432) disposed on the downstream side lower coating layer (431).

In the exhaust gas purification catalyst device (400) of Fig. 4, however, the upstream side upper coating layer (422) includes a downstream part of the upstream side upper coating layer (422(b)) that further extends toward the downstream end from the upstream part of the upstream side upper coating layer (422(a)) disposed on the upstream side lower coating layer (421), covering a portion of the upstream side of the downstream side upper coating layer (432).

In the exhaust gas purification catalyst device (400) of Fig. 4, the types and concentration ratios of precious metal catalysts in each coating layer are the same as for the exhaust gas purification catalyst device (100) of Fig. 1, and it therefore significantly reduces cold HC, promotes three-way catalyst action and reduces hot NOx and hot HC, by the same mechanism as the exhaust gas purification catalyst device (100) of Fig. 1.

The constituent elements of the exhaust gas purification catalyst device of the invention will now be explained in order.

### <Exhaust gas purification catalyst device>

As mentioned above, the exhaust gas purification catalyst device of the invention comprises a substrate, and a catalyst coating layer on the substrate.

### <Substrate>

The substrate in the exhaust gas purification catalyst device of the invention may be one that is commonly used as a substrate in exhaust gas purification catalyst devices. For example, it may be a straight flow type monolith honeycomb substrate composed of a material such as cordierite, SiC, stainless steel or inorganic oxide particles.

### <Catalyst coating layer>

The catalyst coating layer is provided on the substrate. Specifically, the catalyst coating layer may be provided as a layer of the substrate that protrudes to the cell side on the surface of a cell wall defining a cell which connects the upstream end to the downstream end of the exhaust gas flow.

The catalyst coating layer has an upstream side coating layer, disposed on the exhaust gas flow upstream side, and a downstream side coating layer, disposed on the exhaust gas flow downstream side.

### <Upstream side coating layer>

The upstream side coating layer is disposed on the exhaust gas flow upstream side of the substrate. The upstream side coating layer has an upstream side lower coating layer and an upstream side upper coating layer.

The upstream side lower coating layer is directly disposed on the substrate, on the exhaust gas flow upstream side of the substrate. The upstream side upper coating layer is disposed on the upstream side lower coating layer.

### <Downstream side coating layer>

The downstream side coating layer is disposed on the exhaust gas flow downstream side of the substrate. The downstream side coating layer has a downstream side lower coating layer and a downstream side upper coating layer.

The downstream side lower coating layer is directly disposed on the substrate, on the exhaust gas flow downstream side of the substrate. The downstream side upper coating layer is disposed on the downstream side lower coating layer.

### <Length of catalyst coating layer)

From the viewpoint of reliably achieving reduction in cold HC, the length of the upstream side coating layer may be 20% or greater, 22% or greater, 25% or greater, 27% or greater, 30% or greater or 32% or greater of the length of the substrate, while from the viewpoint of ensuring that the activity of the three-way catalyst in the downstream side coating layer is exhibited, it may be 50% or lower, 48% or lower, 45% or lower, 43% or lower, 40% or lower, 38% or lower or 35% or lower of the length of the substrate.

The length of the upstream side coating layer will typically be 20% to 50% of the length of the substrate.

The length of the upstream side coating layer may be considered as either the length of the upstream side lower coating layer or the length of the upstream side upper coating layer. The length of the upstream side lower coating layer and the length of the upstream side upper coating layer may be the same or different. The length of the upstream side upper coating layer and the length of the upstream side lower coating layer may each independently be 25% or greater, 30% or greater, 35% or greater or 40% or greater of the substrate length, and 75% or lower, 70% or lower, 65% or lower, 60% or lower, 55% or lower or 50% or lower of the substrate length.

The length of the upstream side upper coating layer may typically be 30% to 60% of the length of the substrate, independently of the length of the upstream side lower coating layer.

When the length of the upstream side lower coating layer and the length of the upstream side upper coating layer differ, the length of the upstream side coating layer for the present purpose is defined as the length of the portion where the upstream side lower coating layer and upstream side upper coating layer are overlapping on the substrate.

To ensure an assist effect for reduction of cold HC by the three-way catalyst action it is not necessary for the exhaust gas purification catalyst device of the invention to have a region near the edges on the exhaust gas flow upstream side where the upstream side upper coating layer is directly disposed on the substrate without contacting the upstream side lower coating layer.

From the viewpoint of ensuring that the activity of the three-way catalyst is exhibited, the length of the downstream side coating layer may be 50% or greater, 52% or greater, 55% or greater, 60% or greater, 62% or greater or 65% or greater of the substrate length, while from the viewpoint of reliably achieving reduction in cold HC by the upstream side coating layer, it may be 80% or lower, 78% or lower, 75% or lower, 73% or lower, 70% or lower or 68% or lower of the substrate length.

The length of the downstream side coating layer will typically be 50% to 80% of the length of the substrate.

The length of the downstream side coating layer may be considered as the length of the downstream side lower coating layer or the length of the downstream side upper coating layer. The length of the downstream side lower coating layer and the length of the downstream side upper coating layer may be the same or different. When the length of the downstream side lower coating layer and the length of the downstream side upper coating layer differ, the length of the downstream side coating layer for the present purpose is defined as the length of the portion where the downstream side lower coating layer and downstream side upper coating layer are overlapping on the substrate.

From the viewpoint of ensuring the provided length of the layer including Rh at high concentration as a precious metal catalyst, for effective reduction in hot NOx, the total length of the upstream side lower coating layer and downstream side upper coating layer may be 70% or greater, 75% or greater, 80% or greater, 85% or greater, 90% or greater or 95% or greater, or even 100%, of the length of the substrate.

As mentioned above, the exhaust gas purification catalyst device of the invention encompasses cases where the length of the upstream side upper coating layer is longer than the length of the upstream side lower coating layer, so that the upstream side upper coating layer covers part of the downstream side coating layer. For effective reduction of hot NOx in this case, the construction may be such that at least part of the downstream side coating layer, and especially the downstream side upper coating layer, can directly contact with the exhaust gas without being covered by the upstream side upper coating layer.

From this viewpoint, the downstream side upper coating layer may directly contact with the exhaust gas without being covered by the upstream side upper coating layer, in a range of 30% or greater, 35% or greater, 40% or greater, 45% or greater or 50% or greater of the length of the substrate.

### (Coating amount of catalyst coating layer)

For reduction in cold HC it is desirable to set a low heat capacity for the exhaust gas purification catalyst device, especially on the exhaust gas flow upstream side, to increase the temperature rising property. From this viewpoint, the coating amount of the upstream side coating layer may be 250 g/L or lower, 240 g/L or lower, 230 g/L or lower, 220 g/L, 210 g/L or lower, 200 g/L, 190 g/L or lower or 180 g/L or lower, per 1 L of the upstream side coating layer-forming part of the substrate. From the viewpoint of ensuring a cold HC-reducing effect by the upstream side coating layer, the coating amount of the upstream side coating layer may be 160 g/L or greater, 170 g/L or greater, 180 g/L or greater, 190 g/L or greater or 200 g/L or greater, per 1 L of the upstream side coating layer-forming part of the substrate.

Similarly, from the viewpoint of increasing the temperature rising property on the exhaust gas flow upstream side, the coating amount of the upstream side upper coating layer may be 160 g/L or lower, 150 g/L or lower, 140 g/L or lower, 120 g/L or lower, 110 g/L or lower, 100 g/L or lower or 90 g/L or lower, per 1 L of the upstream side upper coating layer-forming part of the substrate. From the viewpoint of ensuring a cold HC-reducing effect by the upstream side upper coating layer, the coating amount of the upstream side upper coating layer may be 60 g/L or greater, 70 g/L or greater, 80 g/L or greater, 90 g/L or greater, 100 g/L or greater or 110 g/L or greater, per 1 L of the upstream side upper coating layer-forming part of the substrate.

From the viewpoint of increasing the temperature rising property on the exhaust gas flow upstream side, the coating amount of the upstream side lower coating layer may be 140 g/L or lower, 130 g/L or lower, 120 g/L or lower, 110 g/L or lower, 100 g/L or lower or 90 g/L or lower, per 1 L of the upstream side lower coating layer-forming part of the substrate. In order to ensure an assist effect on cold HC reduction by action of the three-way catalyst, the coating amount of the upstream side lower coating layer may be 60 g/L or greater, 65 g/L or greater, 70 g/L or greater or 75 g/L or greater, per 1 L of the upstream side lower coating layer-forming part of the substrate.

From the viewpoint of avoiding unnecessary increase in exhaust back pressure while ensuring three-way catalyst action by the downstream side coating layer to achieve reduction in both hot HC and hot NOx, the coating amount of the downstream side upper coating layer may be 120 g/L or lower, 110 g/L or lower, 100 g/L or lower or 90 g/L or lower, and 60 g/L or greater, 65 g/L or greater, 70 g/L or greater, 75 g/L or greater, 80 g/L or greater or 85 g/L or greater, per 1 L of the downstream side upper coating layer-forming part of the substrate.

From the same viewpoint, the coating amount of the downstream side lower coating layer may be 200 g/L, 190 g/L or lower, 185 g/L or lower or 180 g/L or lower, and 150 g/L or greater, 160 g/L or greater, 170 g/L or greater or 175 g/L or greater, per 1 L of the downstream side lower coating layer-forming part of the substrate.

### <Catalyst coating layer components>

### (Precious metal catalyst)

The upstream side lower coating layer, upstream side upper coating layer, downstream side lower coating layer and downstream side upper coating layer each include a precious metal catalyst selected from among Pt, Pd and Rh, and satisfy both of the following conditions (i) and (ii):
(i) the concentrations of either or both Pt and Pd in the upstream side upper coating layer and the downstream side lower coating layer
   are higher than the concentrations of either or both Pt and Pd in the upstream side lower coating layer, and
   higher than the concentrations of either or both Pt and Pd in the downstream side upper coating layer; and
(ii) the concentrations of Rh in the upstream side lower coating layer and downstream side upper coating layer are both:
   higher than the concentration of Rh in the upstream side upper coating layer and
   higher than the concentration of Rh in the downstream side lower coating layer.

Specifically, condition (i) states that the concentrations of either or both Pt and Pd in the upstream side upper coating layer and downstream side lower coating layer:
are 2 times or greater, 5 times or greater, 10 times or greater, 50 times or greater, 100 times or greater, 500 times or greater or 1,000 times or greater,
with respect to the concentrations of either or both Pt and Pd in the upstream side lower coating layer and the concentrations of either or both Pt and Pd in the downstream side upper coating layer,
or the upstream side lower coating layer and downstream side upper coating layer may lack either or both Pt and Pd, so that the relative amount is infinite.

Specifically, condition (ii) states that the concentrations of Rh in the upstream side lower coating layer and downstream side upper coating layer:
are 2 times or greater, 5 times or greater, 10 times or greater, 50 times or greater, 100 times or greater, 500 times or greater or 1,000 times or greater,
with respect to the concentration of Rh in the upstream side upper coating layer and the concentration of Rh in the downstream side lower coating layer,
or the upstream side upper coating layer and downstream side lower coating layer may lack Rh, so that the relative amount is infinite.

Thus, conditions (i) and (ii) signify that:
in the upstream side coating layer, the upper layer includes either or both Pt and Pd at high concentration and the lower layer includes Rh at high concentration, and
in the downstream side coating layer, the upper layer includes Rh at high concentration and the lower layer includes either or both Pt and Pd at high concentration.

The precious metal catalyst concentration in each coating layer is the mass ratio of the coating layer-forming portion of the precious metal catalyst in the coating layer, per 1 L of substrate (g/L).

The upstream side upper coating layer and downstream side lower coating layer may each include either or both Pt and Pd, and especially they include Pd. In such cases the coating layers may also lack Pt.

If the upstream side upper coating layer and downstream side lower coating layer each include Pd and lack Pt, then the Pd content of the coating layer may be described as follows.

The amount of Pd in the upstream side upper coating layer may be 1.0 g/L or greater, 2.0 g/L or greater, 3.0 g/L or greater or 4.0 g/L or greater, and 8.0 g/L or lower, 7.0 g/L or lower, 6.0 g/L or lower, 5.5 g/L or lower, 5.0 g/L or lower, 4.5 g/L or lower or 4.0 g/L or lower, per 1 L of the upstream side upper coating layer-forming part of the substrate.

The amount of Pd in the upstream side lower coating layer may be 0.25 g/L or greater, 0.50 g/L or greater, 0.75 g/L or greater or 1.00 g/L or greater, and 2.00 g/L or lower, 1.75 g/L or lower, 1.50 g/L or lower, 1.25 g/L or lower or 1.00 g/L or lower, per 1 L of the upstream side lower coating layer-forming part of the substrate.

In order to effectively reduce cold HC by the upstream side upper coating layer and thus achieve reduction in total HC, preferably the Pd in the upstream side upper coating layer and downstream side lower coating layer is concentrated in the upstream side upper coating layer. It is also necessary to ensure the three-way catalyst activity in the downstream side coating layer to reduce hot HC.

From this viewpoint, the amount of Pd in the upstream side upper coating layer per 1 L of the upstream side upper coating layer-forming part of the substrate,
is preferably at least 1.5 times, at least 2.0 times, at least 2.5 times, at least 3.0 times, at least 3.5 times or at least 4.0 times, and 10.0 times or less, 8.0 times or less, 7.0 times or less, 6.0 times or less or 5.0 times or less,
of the amount of Pd in the downstream side lower coating layer per 1 L of the downstream side lower coating layer-forming part of the substrate.

The upstream side upper coating layer and downstream side lower coating layer may each contain essentially no Rh. That the coating layer contains essentially no Rh means that the Rh content of each coating layer is 0.020 g/L or lower, 0.010 g/L or lower, 0.005 g/L or lower, 0.003 g/L or lower or 0.001 g/L or lower per 1 L of the substrate at the coating layer-forming portion, or it may contain absolutely no Rh.

The upstream side lower coating layer and downstream side upper coating layer may each contain Rh.

The amount of Rh in the coating layer may be 0.05 g/L or greater, 0.10 g/L or greater, 0.15 g/L or greater or 0.20 g/L or greater, and 0.40 g/L or lower, 0.35 g/L or lower, 0.30 g/L or lower, 0.25 g/L or lower or 0.20 g/L or lower, as the amount of Rh per 1 L of substrate at each coating layer-forming portion.

The ratio (weight ratio) between:
the amount of Rh in the upstream side lower coating layer per 1 L of the upstream side lower coating layer-forming part of the substrate and
the amount of Rh in the downstream side upper coating layer per 1 L of the downstream side upper coating layer-forming part of the substrate,
may be in the range of 1.0:2.0 to 2.0: 1.0, or in the range of 1.0:1.5 to 1.5:1.0, or in the range of 1.0:1.2 to 1.2:1.0.

The upstream side lower coating layer and downstream side upper coating layer may each contain essentially no Pt and Pd. That the coating layer contains essentially no Pt and Pd means that the total amount of Pt and Pd in each coating layer is 0.020 g/L or lower, 0.010 g/L or lower, 0.005 g/L or lower, 0.003 g/L or lower or 0.001 g/L or lower per 1 L of the substrate at the coating layer-forming portion, or it may contain absolutely no Pt and Pd.

The precious metal catalyst in each coating layer may be supported by one or more inorganic oxides, as described below. The precious metal catalyst in the coating layer will typically be supported on one or more types of inorganic oxide microparticles.

### (Optional components)

The upstream side lower coating layer, upstream side upper coating layer, downstream side lower coating layer and downstream side upper coating layer may each include optional components other than the precious metal catalyst. The optional components in the coating layers may be inorganic oxides, co-catalysts or binders.

### - Inorganic oxide -

An inorganic oxide may be an oxide of one or more elements selected from among Al, Si, Ti, Zr, Ce, La, Pr, Nd and Y, for example. When the inorganic residue is of two or more element oxides, it may be a mixture of multiple inorganic oxides, or a complex oxide including multiple elements, or it may be an inorganic oxide in a form that includes both. Specifically, it may be an alumina, silica, titania or silica-alumina complex oxide, or a ceria, zirconia, ceria-zirconia complex oxide (CZ). These inorganic oxides may also be complex oxides doped with a rare earth element other than Ce (such as La, Pr, Nd or Y).

Each of the coating layers may also include a material with oxygen storage capacity (OSC). Including an OSC material in the coating layer can provide an HC catalyst purification function due to atmosphere relaxation by the OSC material even under rich conditions, thus helping to reduce hot HC.

The OSC material will typically be ceria. Ceria may be included in each coating layer in the form of either ceria alone or a complex oxide containing ceria. A complex oxide containing ceria may be CZ, for example, or it may be CZ doped with a rare earth element.

It is sufficient if at least the downstream side lower coating layer includes ceria. If the downstream side lower coating layer includes ceria it will be possible to relax the atmosphere without inhibiting metalization of Rh in the downstream side upper coating layer, thus promoting the three-way catalyst action of the downstream side coating layer and helping to reduce hot HC and hot NOx.

In order to exhibit adequate atmosphere relaxation, the amount of ceria in the downstream side lower coating layer may be greater than 10 g/L, 20 g/L or greater, 30 g/L or greater, 40 g/L or greater, 45 g/L or greater, 50 g/L or greater or 55 g/L or lower, per 1 L of the downstream side lower coating layer-forming part of the substrate. In order to maintain effective cell capacity for the substrate and avoid unnecessarily increasing exhaust back pressure, the amount of ceria in the downstream side lower coating layer may be 100 g/L or lower, 90 g/L or lower, 80 g/L or lower, 75 g/L or lower, 70 g/L or lower or 65 g/L or lower, per 1 L of the downstream side lower coating layer-forming part of the substrate.

The amount of ceria in the downstream side upper coating layer may be 12 g/L or lower, 10 g/L or lower, 9 g/L or lower or 8 g/L or lower per 1 L of the downstream side upper coating layer-forming part of the substrate, to avoid inhibiting metalization of Rh in the downstream side upper coating layer. In order to impart a consistent atmosphere relaxation function to the downstream side upper coating layer as well so as to maintain the reduction purification activity of Rh under lean conditions, the amount of ceria in the downstream side upper coating layer may be 1 g/L or greater, 2 g/L or greater, 3 g/L or greater, 4 g/L or greater or 5 g/L or greater, per 1 L of the downstream side upper coating layer-forming part of the substrate.

In order to increase the atmosphere relaxation function of the downstream side coating layer in a range that does not inhibit metalization of Rh in the downstream side upper coating layer, the total amount of ceria in the upper and lower layers on the downstream side may be 12 g/L or greater, 20 g/L or greater, 30 g/L or greater, 40 g/L or greater, 50 g/L or greater, 55 g/L or greater, 60 g/L or greater or 65 g/L or greater, and 110 g/L or lower, 100 g/L or lower, 90 g/L or lower, 80 g/L or lower, 75 g/L or lower or 70 g/L or lower, per 1 L of substrate at the downstream side coating layer-forming portion.

In order to maintain the oxidative activity of the upstream side coating layer, and especially to effectively reduce cold emission, without inhibiting metalization of the Rh in the upstream side lower coating layer, the amount of ceria in the upstream side lower coating layer may be 10 g/L or lower, 9 g/L or lower or 8 g/L or lower, per 1 L of the upstream side lower coating layer-forming part of the substrate. In order to impart a consistent atmosphere relaxation function to the upstream side lower coating layer as well so as to exhibit the reduction purification activity of Rh under lean conditions, the amount of ceria in the upstream side lower coating layer may be 1 g/L or greater, 2 g/L or greater, 3 g/L or greater, 4 g/L or greater or 5 g/L or greater per 1 L of the upstream side lower coating layer-forming part of the substrate.

The upstream side upper coating layer may also include ceria to impart an atmosphere relaxation function to the upstream side coating layer. However, in order to maintain the oxidative activity of the upstream side coating layer and effectively reduce cold emission, there is no restriction on the amount of ceria in the upstream side upper coating layer, which may be 60 g/L or lower, 50 g/L or lower, 40 g/L or lower, 30 g/L or lower, 20 g/L or lower, 15 g/L or lower, 10 g/L or lower, 5 g/L or lower, 3 g/L or lower or 1 g/L or lower, for example, per 1 L of the upstream side upper coating layer-forming part of the substrate, or the upstream side upper coating layer may contain no ceria.

In order to avoid inhibiting metalization of Rh in the downstream side upper coating layer and upstream side lower coating layer and to maintain the oxidative activity of the upstream side coating layer while effectively reducing cold HC, the concentration of ceria in the upstream side lower coating layer, the concentration of ceria in the upstream side upper coating layer and the concentration of ceria in the downstream side upper coating layer may each independently be 70% or lower, 60% or lower, 50% or lower, 40% or lower, 30% or lower, 25% or lower, 20% or lower, 15% or lower or 10% or lower of the concentration of ceria in the downstream side lower coating layer. The concentration of ceria in the upstream side upper coating layer, in particular, may be 8% or lower, 5% or lower, 3% or lower, 1% or lower or 0.5% or lower of the concentration of ceria in the downstream side lower coating layer, or it may be 0%. The ceria concentrations in the coating layers specified above are the mass ratios of the ceria amounts in the coating layers per 1 L of substrate at the coating layer-forming portion.

In order to maintain the oxidative activity of the upstream side coating layer and achieve effective reduction in cold HC, the ceria concentration in the upstream side coating layer may be 65% or lower, 60% or lower, 50% or lower, 40% or lower, 25% or lower, 30% or lower, 20% or lower or 15% or lower with respect to the ceria concentration in the downstream side coating layer. To impart the upstream side coating layer with the necessary atmosphere oxidizing power to help contribute to reduction in cold HC by the three-way catalyst function of the upstream side coating layer, the ceria concentration in the upstream side coating layer may be 1% or greater, 3% or greater, 5% or greater, 7% or greater or 10% or greater of the ceria concentration in the downstream side coating layer. The ceria concentration in the coating layer specified above is the mass ratio of the total amount of ceria in the upper and lower layers of the coating layer per 1 L of substrate at the coating layer-forming portion.

The upstream side lower coating layer, upstream side upper coating layer, downstream side lower coating layer and downstream side upper coating layer may each also include alumina. The alumina may be included in each coating layer in the form of either alumina alone or a complex oxide containing alumina. A complex oxide containing alumina may be silica-alumina complex oxide, or alumina doped with a rare earth element, for example. The rare earth to be doped into alumina may be La, Pr, Nd or Y, for example, and especially La.

The precious metal catalyst in each coating layer may be supported on one or more inorganic oxides, as described below. The precious metal catalyst may typically be supported on one or more inorganic oxide microparticles, on the surfaces of the particles.

### - Co-catalyst -

Each coating layer may include a co-catalyst.

The co-catalysts to be included in the coating layers of the exhaust gas purification catalyst device of the invention may be alkali metal compounds or alkaline earth metal compounds, for example. Typically, they will be a strong acid salt of an alkali metal or alkaline earth metal, such as barium sulfate.

### - Binder -

The binder to be included in the coating layer of the exhaust gas purification catalyst device of the invention may be an inorganic oxide sol, for example, and typically alumina sol, zirconia sol or titania sol.

### <Method for producing exhaust gas purification catalyst device>

The exhaust gas purification device of the invention can be produced by a publicly known method, or by such a method with appropriate modifications by a person skilled in the art, or by combinations of such methods.

Specific examples of production methods will now be explained using the exhaust gas purification catalyst device (100) shown in Fig. 1 and the exhaust gas purification catalyst device (200) shown in Fig. 2 as examples. However, the method for producing the exhaust gas purification catalyst device of the invention is not limited to the methods described herein.

For production of the exhaust gas purification catalyst device (100) shown in Fig. 1, first a substrate (110) is prepared, as the substrate of the exhaust gas purification catalyst device (100) to be produced.

An upstream side lower coating layer (121) and downstream side lower coating layer (131) are then formed on the substrate (110). The order of forming the upstream side lower coating layer (121) and downstream side lower coating layer (131) may be any order. Next, an upstream side upper coating layer (122) is formed on the upstream side lower coating layer (121) and a downstream side upper coating layer (132) is formed on the downstream side lower coating layer (131), to obtain the desired exhaust gas purification catalyst device (100). The order of forming the upstream side upper coating layer (122) and downstream side upper coating layer (132) may be any order.

As the method for forming each coating layer, the coating solution for formation of each coating layer is coated onto the substrate or onto the lower coating layer in the prescribed coating area and dried if necessary, and then fired. The coating solution for formation of each coating layer may be an aqueous dispersion, for example, containing the catalyst metal precursor, inorganic oxide and other optional components in the prescribed types and amounts. The precious metal catalyst precursor used may be appropriately selected from among nitrates, sulfates, chlorides or complexes of the desired precious metal catalyst, to be one that is soluble in a solvent (such as water).

The firing of all of the coating layers may be carried out together after application of the respective coating solutions, or it may be carried out several times, with the coating solutions for some of the coating layers being applied before firing, and then the coating solutions of the remaining coating layers being applied before additional firing.

For production of the exhaust gas purification catalyst device (200) shown in Fig. 2, first a substrate (210) is prepared, as the substrate of the exhaust gas purification catalyst device (200) to be produced.

The downstream side lower coating layer (231) is then formed on the substrate (210).

Next the Rh layer (240) is formed on the substrate on which the downstream side lower coating layer (231) has been formed. The Rh layer (240) constitutes the upstream side lower coating layer (221) formed directly on the substrate (210) on the exhaust gas flow upstream side, and constitutes the downstream side upper coating layer (232) formed on the downstream side lower coating layer (231) on the exhaust gas flow downstream side, connecting them as a single coating layer.

The upstream side upper coating layer (222) is then formed on the upstream side lower coating layer (221), as the exhaust gas flow upstream side of the Rh layer (240), to obtain the exhaust gas purification catalyst device (200) shown in Fig. 2.

Formation of each coating layer may be carried out by a method similar to production of the exhaust gas purification catalyst device (100) shown in Fig. 1, or with appropriate modification by a person skilled in the art.

### EXAMPLES

Cylindrical cordierite straight flow-type honeycomb substrates each with a capacity of about 1 L were used for the substrates in the following Examples and Comparative Examples.

The components used to prepare the coating solutions were as follows.
Rh precursor: Rhodium chloride
Pd precursor: Palladium nitrate
Alumina: Composite Al₂O₃ containing La
OSC Material A: CZ complex oxide containing La, Pr, Nd and Y (ceria content: 60 mass%)
OSC Material B: CZ complex oxide containing La, Pr, Nd and Y (ceria content: 20 mass%)
Co-catalyst: Barium sulfate
Binder: Alumina sol

### <Example 1>

### 1. Production of exhaust gas purification catalyst devices

### (1) Coating solution preparation

A mixture of 1.45 g of palladium nitrate (corresponding to 0.67 g in terms of Pd metal), 40.20 g of alumina, 67.00 g of OSC material A (corresponding to 40.20 g of ceria), 6.70 g of barium sulfate and 3.35 g of alumina sol in distilled water was wet ground with a bead mill to prepare a downstream side lower Pd layer-forming coating solution.

An upstream side lower Rh layer-forming coating solution, downstream side upper Rh layer-forming coating solution and upstream side upper Pd layer-forming coating solution were each prepared by the same method as for preparation of the downstream side lower Pd layer-forming coating solution described above, except that the types and amounts of components used were as shown in Table 1.

### (2) Catalyst coating layer formation (exhaust gas purification catalyst device production)

The downstream side lower Pd layer-forming coating solution obtained as described above was disposed on the substrate at the downstream end of exhaust gas flow and suctioned with a suction device from the upstream end, for coating of the downstream side lower Pd layer-forming coating solution in a region of 67% of the substrate length from the downstream end of the substrate. The upstream side lower Rh layer-forming coating solution was then disposed at the upstream end of exhaust gas flow on the substrate that had been coated with the downstream side lower Pd layer-forming coating solution, and suctioned with a suction device from the downstream end, for coating of the upstream side lower Rh layer-forming coating solution in a region of 33% of the substrate length from the upstream end of the substrate. The coated substrate was subsequently fired for 2 hours in air at 500°C to form a lower layer composed of a downstream side Pd layer and upstream side Rh layer on the substrate.

The downstream side upper Rh layer-forming coating solution obtained as described above was disposed on the lower layer-formed substrate at the downstream end of exhaust gas flow and suctioned with a suction device from the upstream end, for coating of the downstream side upper Rh layer-forming coating solution in a region of 67% of the substrate length from the downstream end of the lower layer-formed substrate. The upstream side upper Pd layer-forming coating solution was then disposed at the upstream end of exhaust gas flow on the substrate that had been coated with the downstream side upper Rh layer-forming coating solution, and suctioned with a suction device from the downstream end, for coating of the upstream side upper Pd layer-forming coating solution in a region of 33% of the substrate length from the upstream end of the substrate. The coated substrate was subsequently fired for 2 hours in air at 500°C to form an upper layer composed of a downstream side Rh layer and upstream side Pd layer on the lower layer of the substrate, to obtain an exhaust gas purification catalyst device for Example 1.

In this exhaust gas purification catalyst device, the Pd density of the upper layer (upstream side upper Pd layer) in the upstream side zone of the catalyst coating layer (the region of 33% of the substrate length from the upstream end) (the amount of Pd per 1 L of substrate at the upstream side upper Pd layer-forming portion) is the 4.00 g/L-zone.

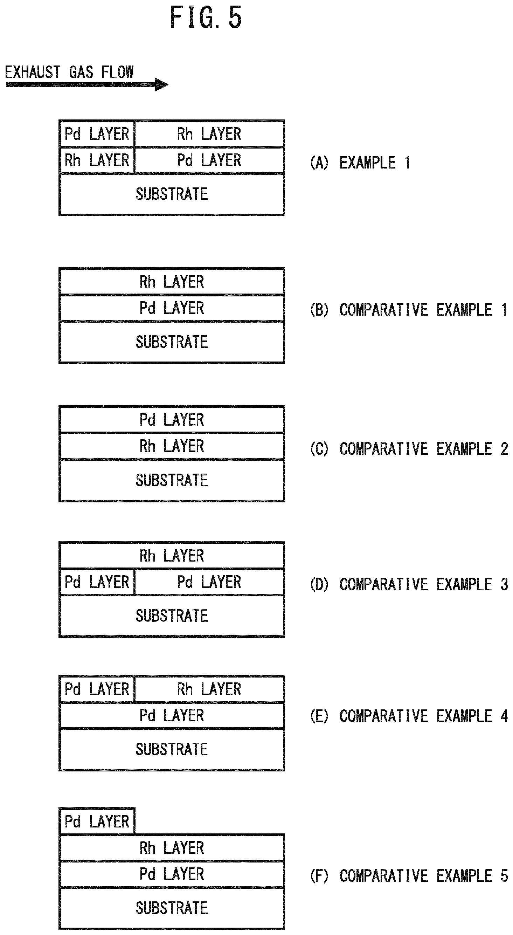

Fig. 5(A) shows the construction of the catalyst coating layer of this exhaust gas purification catalyst device.

### (3) Evaluation of exhaust gas purification catalyst device

The exhaust gas purification catalyst device was subjected to endurance treatment corresponding to 150,000 miles of travel, in an endurance test under alternating rich/lean conditions.

The endurance-tested exhaust gas purification catalyst device was installed in a ULEV70-compliant vehicle equipped with a gasoline engine having a cylinder capacity of 2,000 mL, and used for testing in FTP75 driving mode, and the amounts of NMOG (non-methane organic gas) and NOx emissions were measured in phases Bag1 to Bag3.

Each test exhaust gas purification catalyst device was mounted directly under the engine, but without an underfloor catalyst to facilitate comparison between test devices.

Bag1 phase represented the cold start phase, Bag2 phase represented the transient phase and Bag3 phase represented the hot start phase. Thus, NMOG emission in the Bag1 phase corresponds to cold HC emission, and the total amount of NOx emission in the Bag2 phase and NOx emission in the Bag3 phase corresponds to hot NOx emission.

Table 2 shows the evaluation results for exhaust gas purification catalyst devices.

### <Comparative Examples 1 and 2>

### (1) Coating solution preparation

Lower layer-forming coating solutions and upper layer-forming coating solutions were prepared by the same method as Example 1, except that the types and amounts of components used were as shown in Table 1.

The prepared lower layer-forming coating solutions were:
a lower Pd layer-forming coating solution in Comparative Example 1,
a lower Rh layer-forming coating solution in Comparative Example 2, and the upper layer-forming coating solutions were:
   an upper Rh layer-forming coating solution in Comparative Example 1 and
   an upper Pd layer-forming coating solution in Comparative Example 2.

### (2) Catalyst coating layer formation (exhaust gas purification catalyst device production)

The obtained lower layer-forming coating solution was disposed on the substrate at the downstream end of exhaust gas flow and suctioned with a suction device from the upstream end, for coating of the lower layer-forming coating solution in a region of 100% of the substrate length. The coated substrate was then fired for 2 hours in air at 500°C to form a lower layer on the substrate.

The obtained upper layer-forming coating solution was disposed on the lower layer-formed substrate at the downstream end of exhaust gas flow and suctioned with a suction device from the upstream end, for coating of the upper layer-forming coating solution in a region of 100% of the substrate length from the downstream end of the lower layer-formed substrate. The coated substrate was subsequently fired for 2 hours in air at 500°C to form an upper layer on the lower layer of the substrate, to obtain exhaust gas purification catalyst devices for Comparative Examples 1 and 2.

Fig. 5(B) and Fig. 5(C) show the constructions of the catalyst coating layers of the respective exhaust gas purification catalyst devices.

### (3) Evaluation of exhaust gas purification catalyst devices

The obtained exhaust gas purification catalyst devices were each used for evaluation in the same manner as Example 1. The evaluation results are shown in Table 2.

### <Comparative Example 3>

### (1) Coating solution preparation

A downstream side Pd layer-forming coating solution, upstream side lower Pd layer-forming coating solution and upper Rh layer-forming coating solution were each prepared by the same method as Example 1, except that the types and amounts of components used were as shown in Table 1.

### (2) Catalyst coating layer formation (exhaust gas purification catalyst device production)

The downstream side lower Pd layer-forming coating solution obtained as described above was disposed on the substrate at the downstream end of exhaust gas flow and suctioned with a suction device from the upstream end, for coating of the downstream side lower Pd layer-forming coating solution in a region of 67% of the substrate length from the downstream end of the substrate. The upstream side lower Pd layer-forming coating solution was then disposed at the upstream end of exhaust gas flow on the substrate that had been coated with the downstream side lower Pd layer-forming coating solution, and suctioned with a suction device from the downstream end, for coating of the upstream side lower Pd layer-forming coating solution in a region of 33% of the substrate length from the upstream end of the substrate. The coated substrate was subsequently fired for 2 hours in air at 500°C to form a lower layer composed of a downstream side Pd layer and upstream side Pd layer on the substrate.

The upper Rh layer-forming coating solution obtained as described above was disposed on the lower layer-formed substrate at the downstream end of exhaust gas flow and suctioned with a suction device from the upstream end, for coating of the upper Rh layer-forming coating solution in a region of 100% of the substrate length from the downstream end of the lower layer-formed substrate. The coated substrate was subsequently fired for 2 hours in air at 500°C to form an upper Rh layer on the lower layer of the substrate, to obtain an exhaust gas purification catalyst device for Comparative Example 3.

Fig. 5(D) shows the construction of the catalyst coating layer of this exhaust gas purification catalyst device.

### (3) Evaluation of exhaust gas purification catalyst devices

The obtained exhaust gas purification catalyst devices were used for evaluation in the same manner as Example 1. The evaluation results are shown in Table 2.

### <Comparative Example 4>

### (1) Coating solution preparation

A lower Pd layer-forming coating solution, downstream side upper Rh layer-forming coating solution and upstream side upper Pd layer-forming coating solution were each prepared by the same method as Example 1, except that the types and amounts of components used were as shown in Table 1.

### (2) Catalyst coating layer formation (exhaust gas purification catalyst device production)

The lower Pd layer-forming coating solution obtained as described above was disposed on the substrate at the downstream end of exhaust gas flow and suctioned with a suction device from the upstream end, for coating of the lower Pd layer-forming coating solution in a region of 100% of the substrate length. The coated substrate was then fired for 2 hours in air at 500°C to form a lower Pd layer on the substrate.

The downstream side upper Rh layer-forming coating solution obtained as described above was disposed on the lower layer-formed substrate at the downstream end of exhaust gas flow and suctioned with a suction device from the upstream end, for coating of the downstream side upper Rh layer-forming coating solution in a region of 67% of the substrate length from the downstream end of the lower layer-formed substrate. The upstream side upper Pd layer-forming coating solution was then disposed at the upstream end of exhaust gas flow on the substrate that had been coated with the downstream side upper Rh layer-forming coating solution, and suctioned with a suction device from the downstream end, for coating of the upstream side upper Pd layer-forming coating solution in a region of 33% of the substrate length from the upstream end of the substrate. The coated substrate was subsequently fired for 2 hours in air at 500°C to form an upper layer composed of a downstream side Rh layer and upstream side Pd layer on the lower layer of the substrate, to obtain an exhaust gas purification catalyst device for Comparative Example 4.

Fig. 5(E) shows the construction of the catalyst coating layer of this exhaust gas purification catalyst device.

### (3) Evaluation of exhaust gas purification catalyst device

The obtained exhaust gas purification catalyst device was used for evaluation in the same manner as Example 1. The evaluation results are shown in Table 2.

### <Comparative Example 5>

### (1) Coating solution preparation

A lower Pd layer-forming coating solution, upper Rh layer-forming coating solution and upstream side uppermost Pd layer-forming coating solution were each prepared by the same method as Example 1, except that the types and amounts of components used were as shown in Table 1.

### (2) Catalyst coating layer formation (exhaust gas purification catalyst device production)

The obtained lower Pd layer-forming coating solution and upper Rh layer-forming coating solution were used to form a lower Pd layer and an upper and Rh layer on the substrate in that order, by the same method as Comparative Example 1.

The upstream side uppermost Pd layer-forming coating solution was disposed on the lower layer- and upper layer-formed substrate at the upstream end of exhaust gas flow and suctioned with a suction device from the downstream end, for coating of the upstream side uppermost Pd layer-forming coating solution in a region of 33% of the substrate length from the upstream end of the substrate. The coated substrate was subsequently fired for 2 hours in air at 500°C to form an upstream side uppermost Pd layer on the upper layer of the substrate, to obtain an exhaust gas purification catalyst device for Comparative Example 5.

Fig. 5(F) shows the construction of the catalyst coating layer of this exhaust gas purification catalyst device.

### (3) Evaluation of exhaust gas purification catalyst device

The obtained exhaust gas purification catalyst device was used for evaluation in the same manner as Example 1. The evaluation results are shown in Table 2.

### [Table 1]

**Table 1**

| | Coating solution name | Coating length (w.r.t. substrate %) | Pd precursor (g-Pd) | Rh precursor (g-Rh) | Alumina (g) | OSC Material A | | OSC Material B | | Ba sulfate (g) | Binder (g) |
|---|---|---|---|---|---|---|---|---|---|---|---|
| | | | | | | Total amount (g) | Ceria amount (g) | Total amount (g) | Ceria amount (g) | | |
| Example 1 | Downstream side lower Pd layer-forming coating solution | 67 | 0.67 | - | 40.20 | 67.00 | 40.20 | - | - | 6.70 | 3.35 |
| | Downstream side upper Rh layer-forming coating solution | 67 | - | 0.134 | 20.10 | - | - | 26.80 | 5.36 | 6.70 | 3.35 |
| | Coating solution for formation of the upstream side lower Rh layer | 33 | - | 0.066 | 9.90 | - | - | 13.20 | 2.64 | 3.30 | 1.65 |
| | Upstream side upper Pd layer-forming coating solution | 33 | 1.32 | - | 26.40 | 4.95 | 2.97 | - | - | 3.30 | 1.65 |
| Comp. Ex. 1 | Lower Pd layer-forming coating solution | 100 | 2.00 | - | 60.00 | 70.00 | 42.00 | - | - | 10.00 | 5.00 |
| | Upper Rh layer-forming coating solution | 100 | - | 0.20 | 30.00 | - | - | 40.00 | 8.00 | 10.00 | 5.00 |
| Comp. Ex. 2 | Lower Rh layer-forming coating solution | 100 | - | 0.20 | 30.00 | - | - | 40.00 | 8.00 | 10.00 | 5.00 |
| | Upper Pd layer-forming coating solution | 100 | 2.00 | - | 60.00 | 70.00 | 42.00 | - | - | 10.00 | 5.00 |
| Comp. Ex. 3 | Downstream side lower Pd layer-forming coating solution | 67 | 0.67 | - | 40.20 | 67.00 | 40.20 | - | - | 6.70 | 3.35 |
| | Upstream side lower Pd layer-forming coating solution | 33 | 1.32 | - | 26.40 | 4.95 | 2.97 | - | - | 3.30 | 1.65 |
| | Upper Rh layer-forming coating solution | 100 | - | 0.20 | 30.00 | - | - | 40.00 | 8.00 | 10.00 | 5.00 |
| Comp. Ex. 4 | Lower Pd layer-forming coating solution | 100 | 0.67 | - | 60.00 | 65.00 | 39.00 | - | - | 10.00 | 5.00 |
| | Downstream side upper Rh layer-forming coating solution | 67 | - | 0.20 | 30.15 | - | - | 40.20 | 8.04 | 6.70 | 3.35 |
| | Upstream side upper Pd layer-forming coating solution | 33 | 1.32 | - | 26.40 | 4.95 | 2.97 | - | - | 3.30 | 1.65 |
| Comp. Ex. 5 | Lower Pd layer-forming coating solution | 100 | 0.67 | - | 60.00 | 65.00 | 39.00 | - | - | 10.00 | 5.00 |
| | Upper Rh layer-forming coating solution | 100 | - | 0.20 | 30.00 | - | - | 40.00 | 8.00 | 10.00 | 5.00 |
| | Upstream side uppermost Pd layer-forming coating solution | 33 | 1.32 | - | 26.40 | 4.95 | 2.97 | - | - | 3.30 | 1.65 |

| [Table 2] | | | | | | | | | | | |
|---|---|---|---|---|---|---|---|---|---|---|---|
| Table 1 (continuation) | | | | | | | | | | | |
| | | Coating solution name | | Pd concentration (g/L-zone) | Rh concentration (g/L-zone) | | Ceria concentration (g/L-zone) | | Alumina concentration (g/L-zone) | | |
| Example 1 | | Downstream side lower Pd layer | | 1.00 | - | | 60.00 | | 60.00 | | |
| | | Downstream side upper Rh layer | | - | 0.20 | | 8.00 | | 30.00 | | |
| | | Upstream side lower Rh layer | | - | 0.20 | | 8.00 | | 30.00 | | |
| | | Upstream side upper Pd layer | | 4.00 | - | | 9.00 | | 80.00 | | |
| Comp. Ex. 1 | | Lower Pd layer | | 2.00 | - | | 42.00 | | 60.00 | | |
| | | Upper Rh layer | | - | 0.20 | | 8.00 | | 30.00 | | |
| Comp. Ex. 2 | | Lower Rh layer | | - | 0.20 | | 8.00 | | 30.00 | | |
| | | Upper Pd layer | | 2.00 | - | | 42.00 | | 60.00 | | |
| Comp. Ex. 3 | | Downstream side lower Pd layer | | 1.00 | - | | 60 | | 60.00 | | |
| | | Upstream side lower Pd layer | | 4.00 | - | | 9.00 | | 80.00 | | |
| | | Upper Rh layer | | - | 0.20 | | 8.00 | | 30.00 | | |
| Comp. Ex. 4 | | Lower Pd layer | | - | - | | 39.00 | | 60.00 | | |
| | | Downstream side upper Rh layer | | - | 0.30 | | 12.00 | | 45.00 | | |
| | | Upstream side upper Pd layer | | 4.67 | - | | 9.00 | | 80.00 | | |
| Comp. Ex. 5 | | Lower Pd layer | | - | - | | 39.00 | | 60.00 | | |
| | | Upper Rh layer | | - | 0.20 | | 8.00 | | 30.00 | | |
| | | Upstream side uppermost Pd layer | | 4.67 | - | | 9.00 | | 80.00 | | |

### [Table 3]

**Table 2**

| | Post-endurance emission (g/mile) | | | | | | | | | | |
|---|---|---|---|---|---|---|---|---|---|---|---|
| | NMOG | | | | NOx | | | | NMOG+NOx Total | Cold HC, NMOG (Bag 1) | Hot NOx, NOx (Bag 2+Bag 3) |
| | Bag 1 | Bag 2 | Bag 3 | Total | Bag 1 | Bag 2 | Bag 3 | Total | | | |
| Example 1 | 18.2 | 1.1 | 4.4 | 23.7 | 7.5 | 1.5 | 10.8 | 19.8 | 43.5 | 18.2 | 12.3 |
| Comp. Ex. 1 | 30.6 | 1.2 | 7.0 | 38.8 | 11.1 | 2.5 | 12.1 | 25.7 | 64.5 | 30.6 | 14.6 |
| Comp. Ex. 2 | 27.2 | 1.2 | 5.4 | 33.8 | 11.9 | 4.0 | 15.8 | 31.7 | 65.5 | 27.2 | 19.8 |
| Comp. Ex. 3 | 25.2 | 1.0 | 5.6 | 31.8 | 8.9 | 1.8 | 10.8 | 21.5 | 53.3 | 25.2 | 12.6 |
| Comp. Ex. 4 | 24.1 | 1.5 | 4.2 | 29.8 | 11.0 | 5.5 | 13.3 | 29.8 | 59.6 | 24.1 | 18.8 |
| Comp. Ex. 5 | 24.6 | 2.1 | 4.4 | 31.1 | 9.5 | 4.8 | 13.8 | 28.1 | 59.2 | 24.6 | 18.6 |

In terms of the post-endurance emissions of the exhaust gas purification catalyst device of Comparative Example 1, which had a catalyst coating layer with a two-layer structure comprising a lower Pd layer and an upper Rh layer, and with the catalyst coating layer components evenly distributed throughout 100% of the length of the substrate, a lowering effect was obtained in hot NOx emission but the lowering effect on cold HC emission was inadequate.

With the exhaust gas purification catalyst device of Comparative Example 2, wherein the catalyst coating layer had a two-layer structure comprising a lower Rh layer and an upper Pd layer, and with the catalyst coating layer components evenly distributed throughout 100% of the length of the substrate, the cold HC emission was lowered but the hot NOx emission significantly increased, as compared to the device of Comparative Example 1. This suggests that the low-heat-resistant Pd had suffered heat degradation due to increased temperature on the exhaust gas flow downstream side of the catalyst coating layer by the heat of catalytic reaction, while the presence of the lower Rh layer with NOx reduction purification activity resulted in poorer contact efficiency with exhaust gas, thus lowering the reaction efficiency.

The exhaust gas purification catalyst device of Comparative Example 3 had the construction of the device of Comparative Example 1 but with the lower Pd layer zoned on the upstream side and downstream side of exhaust gas flow and a higher Pd concentration on the upstream side. This exhaust gas purification device was expected to have lower cold HC emission while maintaining the lowering effect on hot NOx emission exhibited by the device of Comparative Example 1. However, the device of Comparative Example 3 exhibited an insufficient lowering effect on cold HC emission. This was attributed to Pd in the lower layer, and the lower reaction efficiency with HC.

The exhaust gas purification catalyst device of Comparative Example 4 had the construction of the device of Comparative Example 1 but with the upper layer zoned and with the Pd layer disposed on the exhaust gas flow upstream side. The length of the upper Rh layer was shorter by the extent of the Pd layer disposed on the upstream side. With the device of Comparative Example 4, cold HC emission was reduced to some degree by the Pd disposed on the upstream side upper layer. However, hot NOx emission increased compared to the device of Comparative Example 1. This was attributed to the shortened length of the upper Rh layer.

The exhaust gas purification catalyst device of Comparative Example 5 had the construction of the device of Comparative Example 1 but with a Pd layer added to the uppermost layer on the upstream side. With the device of Comparative Example 5, cold HC emission was reduced to some degree. However, hot NOx emission increased compared to the device of Comparative Example 1. This is thought to be due to the additional Pd layer on the uppermost layer on the upstream side which increased the heat capacity of the catalyst coating layer and impaired the temperature rising property.

Both cold HC emission and hot NOx emission were significantly reduced with the exhaust gas purification catalyst device of Example 1 having the construction of the invention, compared to the Comparative Examples. The reduced emissions also resulted in a significant reduction in total emission of NMOG and NOx.

### <Examples 2 to 5>

### (1) Coating solution preparation

Coating solutions for formation of each layer were prepared in the same manner as Example 1, except that the amount of OSC material A in the upstream side upper Pd layer-forming coating solution was changed as shown in Table 3.

### (2) Catalyst coating layer formation (exhaust gas purification catalyst device production)

Using the coating solutions for formation of each layer obtained as described above, a lower layer comprising a downstream side Pd layer and upstream side Rh layer, and an upper layer comprising a downstream side Rh layer and upstream side Pd layer were formed in that order on a substrate in the same manner as Example 1, to obtain exhaust gas purification catalyst devices for Examples 2 to 5.

### (3) Evaluation of exhaust gas purification catalyst device

Each of the obtained exhaust gas purification catalyst devices was used for evaluation in the same manner as Example 1. The cold HC emission evaluation results (Bag1 phase NMOG emission) are shown in Table 4, together with the evaluation results for Example 1.

### [Table 4]

**Table 3**

| | Coating solution name | Coating length (w.r.t. substrate %) | Pd precursor (g-Pd) | Rh precursor (g-Rh) | Alumina (g) | OSC Material A | | OSC Material B | | Ba sulfate (g) | Binder (g) |
|---|---|---|---|---|---|---|---|---|---|---|---|
| | | | | | | Total amount (g) | Ceria amount (g) | Total amount (g) | Ceria amount (g) | | |
| Example 1 | Downstream side lower Pd layer-forming coating solution | 67 | 0.67 | - | 40.20 | 67.00 | 40.20 | - | - | 6.70 | 3.35 |
| | Downstream side upper Rh layer-forming coating solution | 67 | - | 0.134 | 20.10 | - | - | 26.80 | 5.36 | 6.70 | 3.35 |
| | Coating solution for formation of the upstream side lower Rh layer | 33 | - | 0.066 | 9.90 | - | - | 13.20 | 2.64 | 3.30 | 1.65 |
| | Upstream side upper Pd layer-forming coating solution | 33 | 1.32 | - | 26.40 | 4.95 | 2.97 | - | - | 3.30 | 1.65 |
| Example 2 | Downstream side lower Pd layer-forming coating solution | 67 | 0.67 | - | 40.20 | 67.00 | 40.20 | - | - | 6.70 | 3.35 |
| | Downstream side upper Rh layer-forming coating solution | 67 | - | 0.134 | 20.10 | - | - | 26.80 | 5.36 | 6.70 | 3.35 |
| | Coating solution for formation of the upstream side lower Rh layer | 33 | - | 0.066 | 9.90 | - | - | 13.20 | 2.64 | 3.30 | 1.65 |
| | Upstream side upper Pd layer-forming coating solution | 33 | 1.32 | - | 26.40 | - | - | - | - | 3.30 | 1.65 |
| Example 3 | Downstream side lower Pd layer-forming coating solution | 67 | 0.67 | - | 40.20 | 67.00 | 40.20 | - | - | 6.70 | 3.35 |
| | Downstream side upper Rh layer-forming coating solution | 67 | - | 0.134 | 20.10 | - | - | 26.80 | 5.36 | 6.70 | 3.35 |
| | Coating solution for formation of the upstream side lower Rh layer | 33 | - | 0.066 | 9.90 | - | - | 13.20 | 2.64 | 3.30 | 1.65 |
| | Upstream side upper Pd layer-forming coating solution | 33 | 1.32 | - | 26.40 | 9.90 | 5.94 | - | - | 3.30 | 1.65 |
| Example 4 | Downstream side lower Pd layer-forming coating solution | 67 | 0.67 | - | 40.20 | 67.00 | 40.20 | - | - | 6.70 | 3.35 |
| | Downstream side upper Rh layer-forming coating solution | 67 | - | 0.134 | 20.10 | - | - | 26.80 | 5.36 | 6.70 | 3.35 |
| | Coating solution for formation of the upstream side lower Rh layer | 33 | - | 0.066 | 9.90 | - | - | 13.20 | 2.64 | 3.30 | 1.65 |
| | Upstream side upper Pd layer-forming coating solution | 33 | 1.32 | - | 26.40 | 14.85 | 8.91 | - | - | 3.30 | 1.65 |
| Example 5 | Downstream side lower Pd layer-forming coating solution | 67 | 0.67 | - | 40.20 | 67.00 | 40.20 | - | - | 6.70 | 3.35 |
| | Downstream side upper Rh layer-forming coating solution | 67 | - | 0.134 | 20.10 | - | - | 26.80 | 5.36 | 6.70 | 3.35 |
| | Coating solution for formation of the upstream side lower Rh layer | 33 | - | 0.066 | 9.90 | - | - | 13.20 | 2.64 | 3.30 | 1.65 |
| | Upstream side upper Pd layer-forming coating solution | 33 | 1.32 | - | 26.40 | 19.80 | 11.88 | - | - | 3.30 | 1.65 |

### [Table 5]

**Table 4**

| | Zone | Layer | Pd amount | | Rh amount | | Ceria amount | | | | Cold HC, NMOG (Bag 1) |
|---|---|---|---|---|---|---|---|---|---|---|---|
| | | | (g) | (g/L- zone) | (g) | (g/L- zone) | (g) | (g/L- zone) | Total (g) | Ratio w.r.t. downstream side lower layer | |
| Example 1 | Downstream side 67% | Lower layer | 0.67 | 1.00 | 0.000 | 0.00 | 40.20 | 60.00 | 51.17 | - | 18.2 |
| | | Upper layer | 0.00 | 0.00 | 0.134 | 0.20 | 5.36 | 8.00 | | 0.13 | |
| | Upstream side 33% | Lower layer | 0.00 | 0.00 | 0.066 | 0.20 | 2.64 | 8.00 | | 0.13 | |
| | | Upper layer | 1.32 | 4.00 | 0.000 | 0.00 | 2.97 | 9.00 | | 0.15 | |
| Example 2 | Downstream side 67% | Lower layer | 0.67 | 1.00 | 0.000 | 0.00 | 40.20 | 60.00 | 48.20 | - | 19.5 |
| | | Upper layer | 0.00 | 0.00 | 0.134 | 0.20 | 5.36 | 8.00 | | 0.13 | |
| | Upstream side 33% | Lower layer | 0.00 | 0.00 | 0.066 | 0.20 | 2.64 | 8.00 | | 0.13 | |
| | | Upper layer | 1.32 | 4.00 | 0.000 | 0.00 | 0.00 | 0.00 | | 0.00 | |
| Example 3 | Downstream side 67% | Lower layer | 0.67 | 1.00 | 0.000 | 0.00 | 40.20 | 60.00 | 54.14 | - | 19.8 |
| | | Upper layer | 0.00 | 0.00 | 0.134 | 0.20 | 5.36 | 8.00 | | 0.13 | |
| | Upstream side 33% | Lower layer | 0.00 | 0.00 | 0.066 | 0.20 | 2.64 | 8.00 | | 0.13 | |
| | | Upper layer | 1.32 | 4.00 | 0.000 | 0.00 | 5.94 | 18.00 | | 0.30 | |
| Example 4 | Downstream side 67% | Lower layer | 0.67 | 1.00 | 0.000 | 0.00 | 40.20 | 60.00 | 57.11 | - | 24.5 |
| | | Upper layer | 0.00 | 0.00 | 0.134 | 0.20 | 5.36 | 8.00 | | 0.13 | |
| | Upstream side 33% | Lower layer | 0.00 | 0.00 | 0.066 | 0.20 | 2.64 | 8.00 | | 0.13 | |
| | | Upper layer | 1.32 | 4.00 | 0.000 | 0.00 | 8.91 | 27.00 | | 0.45 | |
| Example 5 | Downstream side 67% | Lower layer | 0.67 | 1.00 | 0.000 | 0.00 | 40.20 | 60.00 | 60.08 | - | 26.0 |
| | | Upper layer | 0.00 | 0.00 | 0.134 | 0.20 | 5.36 | 8.00 | | 0.13 | |
| | Upstream side 33% | Lower layer | 0.00 | 0.00 | 0.066 | 0.20 | 2.64 | 8.00 | | 0.13 | |
| | | Upper layer | 1.32 | 4.00 | 0.000 | 0.00 | 11.88 | 36.00 | | 0.60 | |

The results shown in Table 3 and Table 4 indicated that the levels of cold HC emission by the exhaust gas purification catalyst devices of Examples 1 to 5 were generally low values. A lower cold HC emission level tended to be seen with a lower ratio of the ceria concentration in the upstream side upper layer with respect to the ceria concentration in the downstream side lower layer. The cold HC emission level was most particularly low with the exhaust gas purification catalyst devices of Examples 1 to 3, wherein the ratio of the ceria concentration in the upstream side upper layer with respect to the ceria concentration in the downstream side lower layer was below 0.45. It is thought that the oxidation catalyst activity of the Pd was maintained at a high level even under rich conditions due to the lower amount of OSC material in the upstream side zone, and especially in the upstream side upper Pd layer, which resulted in limited oxygen absorption by the OSC material.

### <Examples 6 to 8>

### (1) Coating solution preparation

Coating solutions for formation of each layer were prepared in the same manner as Example 1, except that the amount of alumina in the upstream side upper Pd layer-forming coating solution was changed as shown in Table 5.

### (2) Catalyst coating layer formation (exhaust gas purification catalyst device production)

Using the coating solutions for formation of each layer obtained as described above, a lower layer comprising a downstream side Pd layer and upstream side Rh layer, and an upper layer comprising a downstream side Rh layer and upstream side Pd layer were formed in that order on a substrate in the same manner as Example 1, to obtain exhaust gas purification catalyst devices for Examples 2 to 5.

### (3) Evaluation of exhaust gas purification catalyst devices

Each of the obtained exhaust gas purification catalyst devices was used for evaluation in the same manner as Example 1. The cold HC emission evaluation results (Bag1 phase NMOG emission) are shown in Table 6, together with the evaluation results for Example 1.

### [Table 6]

**Table 5**

| | Coating solution name | Pd precursor (g-Pd) | Rh precursor (g-Rh) | Alumina (g) | OSC Material A | | OSC Material B | | Ba sulfate (g) | Binder (g) |
|---|---|---|---|---|---|---|---|---|---|---|
| | | | | | Total amount (g) | Ceria (g) | Total amount (g) | Ceria (g) | | |
| Example 1 | Downstream side lower Pd layer-forming coating solution | 0.67 | - | 40.20 | 67.00 | 40.20 | - | - | 6.70 | 3.35 |
| | Downstream side upper Rh layer-forming coating solution | - | 0.134 | 20.10 | - | - | 26.80 | 5.36 | 6.70 | 3.35 |
| | Coating solution for formation of the upstream side lower Rh layer | - | 0.066 | 9.90 | - | - | 13.20 | 2.64 | 3.30 | 1.65 |
| | Upstream side upper Pd layer-forming coating solution | 1.32 | - | 26.40 | 4.95 | 2.97 | - | - | 3.300 | 1.65 |
| Example 6 | Downstream side lower Pd layer-forming coating solution | 0.67 | - | 40.20 | 67.00 | 40.20 | - | - | 6.70 | 3.35 |
| | Downstream side upper Rh layer-forming coating solution | - | 0.134 | 20.10 | - | - | 26.80 | 5.36 | 6.70 | 3.35 |
| | Coating solution for formation of the upstream side lower Rh layer | - | 0.066 | 9.90 | - | - | 13.20 | 2.64 | 3.30 | 1.65 |
| | Upstream side upper Pd layer-forming coating solution | 1.32 | - | 19.80 | 4.95 | 2.97 | - | - | 3.30 | 1.65 |
| Example 7 | Downstream side lower Pd layer-forming coating solution | 0.67 | - | 40.20 | 67.00 | 40.20 | - | - | 6.70 | 3.35 |
| | Downstream side upper Rh layer-forming coating solution | - | 0.134 | 20.10 | - | - | 26.80 | 5.36 | 6.70 | 3.35 |
| | Coating solution for formation of the upstream side lower Rh layer | - | 0.066 | 9.90 | - | - | 13.20 | 2.64 | 3.30 | 1.65 |
| | Upstream side upper Pd layer-forming coating solution | 1.32 | - | 33.00 | 4.95 | 2.97 | - | - | 3.30 | 1.65 |
| Example 8 | Downstream side lower Pd layer-forming coating solution | 0.67 | - | 40.20 | 67.00 | 40.20 | - | - | 6.70 | 3.35 |
| | Downstream side upper Rh layer-forming coating solution | - | 0.134 | 20.10 | - | - | 26.80 | 5.36 | 6.70 | 3.35 |
| | Coating solution for formation of the upstream side lower Rh layer | - | 0.066 | 9.90 | - | - | 13.20 | 2.64 | 3.30 | 1.65 |
| | Upstream side upper Pd layer-forming coating solution | 1.32 | - | 39.60 | 4.95 | 2.97 | - | - | 3.30 | 1.65 |

### [Table 7]

**Table 6**

| | Zone | Layer | Coating amount | | | | | | | | | | Cold HC, NMOG (Bag 1) |
|---|---|---|---|---|---|---|---|---|---|---|---|---|---|
| | | | OSC Material A | | OSC Material B | | Alumina | | Total solid content | | | | |
| | | | Per zone | | Per zone | | Per zone | | By upper/lower layer | | Upper/lower layer total | | |
| | | | (g) | (g/L- zone) | (g) | (g/L- zone) | (g) | (g/L- zone) | (g) | (g/L- zone) | (g) | (g/L- zone) | |
| Example 1 | Downstream side 67% | Lower layer | 67.00 | 100.00 | - | - | 40.20 | 60.00 | 117.92 | 176.00 | 175.00 | 261.20 | 18.2 |
| | | Upper layer | - | - | 26.80 | 40.00 | 20.10 | 30.00 | 57.08 | 85.20 | | | |
| | Upstream side 33% | Lower layer | - | - | 13.20 | 40.00 | 9.90 | 30.00 | 28.12 | 85.20 | 65.74 | 199.20 | |
| | | Upper layer | 4.95 | 15.00 | - | - | 26.40 | 80.00 | 37.62 | 114.00 | | | |
| Example 6 | Downstream side 67% | Lower layer | 67.00 | 100.00 | - | - | 40.20 | 60.00 | 117.92 | 176.00 | 175.00 | 261.20 | 18.1 |
| | | Upper layer | - | - | 26.80 | 40.00 | 20.10 | 30.00 | 57.08 | 85.20 | | | |
| | Upstream side 33% | Lower layer | - | - | 13.20 | 40.00 | 9.90 | 30.00 | 28.12 | 85.20 | 59.14 | 179.20 | |
| | | Upper layer | 4.95 | 15.00 | - | - | 19.80 | 60.00 | 31.02 | 94.00 | | | |
| Example 7 | Downstream side 67% | Lower layer | 67.00 | 100.00 | - | - | 40.20 | 60.00 | 117.92 | 176.00 | 175.00 | 261.20 | 22.8 |
| | | Upper layer | - | - | 26.80 | 40.00 | 20.10 | 30.00 | 57.08 | 85.20 | | | |
| | Upstream side 33% | Lower layer | - | - | 13.20 | 40.00 | 9.90 | 30.00 | 28.12 | 85.20 | 72.34 | 219.20 | |
| | | Upper layer | 4.95 | 15.00 | - | - | 33.00 | 100.00 | 44.22 | 134.00 | | | |
| Example 8 | Downstream side 67% | Lower layer | 67.00 | 100.00 | - | - | 40.20 | 60.00 | 117.92 | 176.00 | 175.00 | 261.20 | 24.9 |
| | | Upper layer | - | - | 26.80 | 40.00 | 20.10 | 30.00 | 57.08 | 85.20 | | | |
| | Upstream side 33% | Lower layer | - | - | 13.20 | 40.00 | 9.90 | 30.00 | 28.12 | 85.20 | 78.94 | 239.20 | |
| | | Upper layer | 4.95 | 15.00 | - | - | 39.60 | 120.00 | 50.82 | 154.00 | | | |

The results shown in Table 5 and Table 6 indicated that the levels of cold HC emission by the exhaust gas purification catalyst devices of Examples 1 and 6 to 8 were generally low values. In particular, a lower cold HC emission level was seen with lower coating amount (total solid content) for the catalyst layer of the upstream side upper layer. The cold HC emission level was most particularly low with the exhaust gas purification catalyst devices of Examples 1 and 6, wherein the catalyst coating layer amount on the upstream side upper layer was lower than about 130 g/L. This suggests that the lower coating amount of the catalyst coating layer on the upstream side upper layer decreased the heat capacity, which was especially advantageous from the viewpoint of the warm-up property of the Pd layer as the upstream side upper layer.

### <Example 9>

### (1) Coating solution preparation

A downstream side lower Pd layer-forming coating solution, Rh layer-forming coating solution and upstream side upper Pd layer-forming coating solution were each prepared by the same method as Example 1, except that the types and amounts of components used were as shown in Table 7.

### (2) Catalyst coating layer formation (exhaust gas purification catalyst device production)

The downstream side lower Pd layer-forming coating solution obtained as described above was disposed on the substrate at the downstream end of exhaust gas flow and suctioned with a suction device from the upstream end, for coating of the downstream side lower Pd layer-forming coating solution in a region of 67% of the substrate length from the downstream end of the substrate. The upstream side lower Rh layer-forming coating solution was then disposed at the upstream end of exhaust gas flow on the substrate that had been coated with the downstream side lower Pd layer-forming coating solution, and suctioned with a suction device from the downstream end, for coating of the Rh layer-forming coating solution in a region of 80% of the substrate length from the upstream end of the substrate. The upstream side upper Pd layer-forming coating solution was then disposed at the upstream end of exhaust gas flow on the substrate that had been coated with the downstream side lower Pd layer-forming coating solution and Rh layer-forming coating solution, and suctioned with a suction device from the downstream end, for coating of the upstream side upper Pd layer-forming coating solution in a region of 33% of the substrate length from the upstream end of the substrate. The coated substrate was subsequently fired for 2 hours in air at 500°C to obtain an exhaust gas purification catalyst device for Example 9 having a downstream side lower Pd layer, a Rh layer with a length of 80% of the substrate length from the upstream end, and an upstream side upper Pd layer, formed in that order on the substrate.

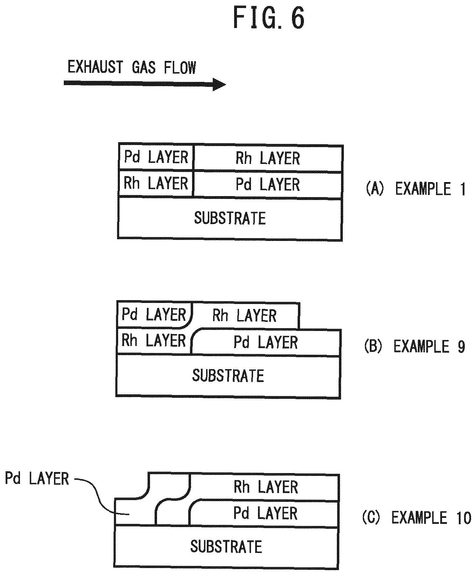

Fig. 6(B) shows the construction of the catalyst coating layer of this exhaust gas purification catalyst device.

### (3) Evaluation of exhaust gas purification catalyst device

The obtained exhaust gas purification catalyst device was used for evaluation in the same manner as Example 1. The evaluation results are shown in Table 8 together with the results of Example 1.

### <Example 10>

### (1) Coating solution preparation

Coating solutions for formation of each layer listed in Table 7 were prepared in the same manner as Example 9.

### (2) Catalyst coating layer formation (exhaust gas purification catalyst device production)

An exhaust gas purification catalyst device for Example 10, having a downstream side lower Pd layer, a Rh layer with a length of 80% of the substrate length from the downstream end, and an upstream side upper Pd layer in that order on the substrate, was obtained in the same manner as Example 9, except that the position of the Rh layer-forming coating solution was at the downstream end of exhaust gas flow, and it was suctioned with a suction device from the upstream end for coating of the Rh layer-forming coating solution in a region of 80% of the substrate length from the downstream end.

Fig. 6(C) shows the construction of the catalyst coating layer of this exhaust gas purification catalyst device.

### (3) Evaluation of exhaust gas purification catalyst device

The obtained exhaust gas purification catalyst device was used for evaluation in the same manner as Example 1. The evaluation results are shown in Table 8 together with the results of Example 1.

### [Table 8]

**Table 7**

| | Coating solution name | Pd precursor (g-Pd) | Rh precursor (g-Rh) | Alumina (g) | OSC Material A | | OSC Material B | | Ba sulfate (g) | Binder (g) |
|---|---|---|---|---|---|---|---|---|---|---|
| | | | | | Total amount (g) | Ceria amount (g) | Total amount (g) | Ceria amount (g) | | |
| Example 9 | Downstream side lower Pd layer-forming coating solution | 0.67 | - | 40.20 | 67.00 | 40.20 | - | - | 6.70 | 3.35 |
| | Rh layer-forming coating solution | - | 0.16 | 24.00 | - | - | 48.00 | 9.6 | 8.00 | 4 |
| Example 10 | Upstream side upper Pd layer-forming coating solution | 1.32 | - | 26.40 | 4.95 | 2.97 | - | - | 3.30 | 1.65 |

### [Table 9]

**Table 8**

| | Rh layer coating width | Post-endurance emission (g/mile) | | | | | | | | | | |
|---|---|---|---|---|---|---|---|---|---|---|---|---|
| | | NMOG | | | | NOx | | | | NMOG+NOx Total | Cold HC, NMOG (Bag 1) | Hot NOx, NOx (Bag 2+Bag 3) |
| | | Bag 1 | Bag 2 | Bag 3 | Total | Bag 1 | Bag 2 | Bag 3 | Total | | | |
| Example 1 | 100% upstream side 33% + downstream side 67% | 18.2 | 1.1 | 4.4 | 23.7 | 7.5 | 1.5 | 10.8 | 19.8 | 43.5 | 18.2 | 12.3 |
| Example 9 | 80% from upstream end | 17.5 | 1.4 | 5.1 | 24.0 | 9.1 | 2.4 | 11.2 | 22.7 | 46.7 | 17.5 | 13.6 |
| Example 10 | 80% from downstream end | 26.1 | 1.3 | 4.8 | 32.2 | 11.9 | 4.3 | 12.4 | 28.6 | 60.8 | 26.1 | 16.7 |

The following conclusions were drawn from the results in Tables 7 and 8.

With the exhaust gas purification catalyst device of Example 9 which had a Rh layer in a region of 80% of the length of the substrate from the upstream end of the substrate, both NMOG and NOx emissions were equivalent to those of the device of Example 1. It was thought that the hot NOx emission level would increase because the exhaust gas purification catalyst device of Example 9 did not have a Rh layer in a region of 20% of the substrate length from the downstream end of the substrate. However, the effect of the lack of the Rh layer on the downstream side was minimal when the Rh layer was present at a length of about 80% of the substrate length.

With the exhaust gas purification catalyst device of Example 10, wherein the Rh layer was present in a region of 80% of the substrate length from the downstream end of the substrate, both cold HC emission and cold NOx emission increased. The exhaust gas purification catalyst device of Example 10 did not have the Rh layer in a region of 20% of the substrate length from the upstream end of the substrate. This is thought to have affected both the cold HC emission increase and cold NOx emission increase.

### <Examples 11 to 16>

### (1) Coating solution preparation

A downstream side lower Pd layer-forming coating solution, upstream side lower Rh layer-forming coating solution, downstream side upper Rh layer-forming coating solution and upstream side upper Pd layer-forming coating solution were each prepared with the same compositions as their corresponding coating solutions in Example 1.

### (2) Catalyst coating layer formation (exhaust gas purification catalyst device production)

The prepared downstream side lower Pd layer-forming coating solution and upstream side lower Rh layer-forming coating solution were used to form a lower layer comprising a downstream side Pd layer and upstream side Rh layer on the substrate in the same manner as Example 1. The prepared downstream side upper Rh layer-forming coating solution was used for coating of the downstream side upper Rh layer-forming coating solution on the lower layer of the substrate in the same manner as Example 1.

The obtained upstream side upper Pd layer-forming coating solution was then disposed at the upstream end of exhaust gas flow on the substrate that had been coated with the downstream side upper Rh layer-forming coating solution on the lower layer, and suctioned with a suction device from the upstream end, for coating of the upstream side upper Pd layer-forming coating solution. The degree of suction was adjusted during this time so that the coating length (d(%)) of the upstream side upper Pd layer-forming coating solution with respect to the substrate length was the respective length listed in Table 9. The coated substrate was then fired for 2 hours in air at 500°C to obtain the respective exhaust gas purification catalyst devices for Examples 11 to 16.

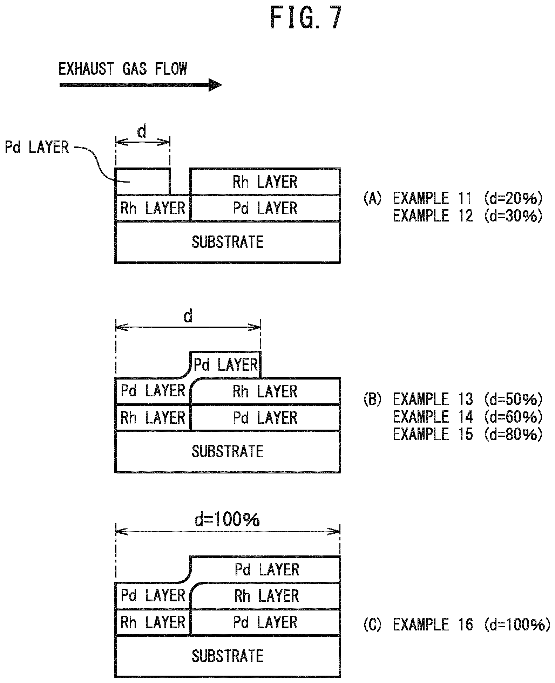

Fig. 7(A) to (C) show the constructions of the catalyst coating layers of the obtained exhaust gas purification catalyst devices.

### (3) Evaluation of exhaust gas purification catalyst devices

The obtained exhaust gas purification catalyst devices were used for evaluation in the same manner as Example 1. The evaluation results are shown in Table 9 together with the results of Example 1.

Table 9 also shows the ratio of the coating length of the upstream side upper Pd layer, and the length of the part of the downstream side upper Rh layer not covered by the upstream side upper Pd layer and able to directly contact with exhaust gas, both with respect to the length of the substrate ("w.r.t. substrate length (%)").

### [Table 10]

**Table 9**

| | Upstream side upper Pd layer coating length (w.r.t. substrate length (%)) | Downstream side upper Rh layer exposure length (w.r.t. substrate length (%)) Coating width | Post-endurance emission (g/mile) | | | | | | | | | | |
|---|---|---|---|---|---|---|---|---|---|---|---|---|---|
| | | | NMOG | | | | NOx | | | | NMOG+NOx Total | Cold HC, NMOG (Bag 1) | Hot NOx, NOx (Bag 2+Bag 3) |
| | | | Bag 1 | Bag 2 | Bag 3 | Total | Bag 1 | Bag 2 | Bag 3 | Total | | | |
| Example 11 | 20 | 80 | 23.1 | 2.1 | 4.3 | 29.5 | 8.2 | 3.2 | 12.8 | 24.2 | 53.7 | 23.1 | 16.0 |
| Example 12 | 30 | 70 | 19.1 | 1.4 | 3.8 | 24.3 | 7.8 | 1.2 | 11.2 | 20.2 | 44.5 | 19.1 | 12.4 |
| Example 1 | 33 | 67 | 18.2 | 1.1 | 4.4 | 23.7 | 7.5 | 1.5 | 10.8 | 19.8 | 43.5 | 18.2 | 12.3 |
| Example 13 | 50 | 50 | 18.6 | 1.3 | 3.5 | 23.4 | 7.6 | 2.1 | 12.1 | 21.8 | 45.2 | 18.6 | 14.2 |
| Example 14 | 60 | 40 | 18.8 | 1.5 | 3.8 | 24.1 | 7.2 | 1.8 | 11.8 | 20.8 | 44.9 | 18.8 | 13.6 |
| Example 15 | 80 | 20 | 25.2 | 2.1 | 6.4 | 33.7 | 9.2 | 2.9 | 13.7 | 25.8 | 59.5 | 25.2 | 16.6 |
| Example 16 | 100 | 0 | 27.2 | 1.2 | 5.4 | 33.8 | 11.9 | 4.0 | 15.8 | 31.7 | 65.5 | 27.2 | 19.8 |

The following conclusions were drawn from the results in Table 9.

The exhaust gas purification catalyst devices of Example 1 and Examples 11 to 16 all had excellent reduction in cold HC and hot NOx.

In particular, both cold HC and hot NOx emissions were greatly reduced in Example 1 and Examples 12 to 14, wherein the upstream side upper Pd layer length was 30% to 60% of the length of the substrate (and therefore the length of the downstream side upper Rh layer not covered by the upstream side upper Pd layer and able to directly contact with exhaust gas was 40% to 70% of the length of the substrate).

### REFERENCE SIGNS LIST

100, 200, 300, 400 Exhaust gas purification catalyst device
110, 210, 310, 410 Substrate
120, 220, 320, 420 Upstream side coating layer
121, 221, 321, 421 Upstream side lower coating layer
122, 222, 322, 422 Upstream side upper coating layer
130, 230, 330, 430 Downstream side coating layer
131, 231, 331, 431 Downstream side lower coating layer
132, 232, 332, 432 Downstream side upper coating layer
240 Rh layer
422(a) Upstream part of upstream side upper coating layer
422(b) Downstream part of upstream side upper coating layer

## Claims

1. An exhaust gas purification catalyst device comprising a substrate and a catalyst coating layer on the substrate, wherein:
the catalyst coating layer has an upstream side coating layer disposed on the exhaust gas flow upstream side and a downstream side coating layer disposed on the exhaust gas flow downstream side,
the upstream side coating layer has an upstream side lower coating layer disposed on the substrate and an upstream side upper coating layer disposed on the upstream side lower coating layer and
the downstream side coating layer has a downstream side lower coating layer disposed on the substrate and a downstream side upper coating layer disposed on the downstream side lower coating layer,
the upstream side lower coating layer, the upstream side upper coating layer, the downstream side lower coating layer and the downstream side upper coating layer each include a precious metal catalyst selected from among Pt, Pd and Rh,
and the exhaust gas purification catalyst device satisfying both of the following conditions (i) and (ii):
(i) the concentrations of either or both Pt and Pd in the upstream side upper coating layer and the downstream side lower coating layer are:
higher than the concentrations of either or both Pt and Pd in the upstream side lower coating layer, and
higher than the concentrations of either or both Pt and Pd in the downstream side upper coating layer; and
(ii) the concentrations of Rh in the upstream side lower coating layer and downstream side upper coating layer are:
higher than the concentration of Rh in the upstream side upper coating layer, and
higher than the concentration of Rh in the downstream side lower coating layer.

2. The exhaust gas purification catalyst device according to claim 1, wherein:
at least the downstream side lower coating layer contains ceria, and
the concentration of ceria in the upstream side lower coating layer, the concentration of ceria in the upstream side upper coating layer and the concentration of ceria in the downstream side upper coating layer are all 70% or less of the concentration of ceria in the downstream side lower coating layer.

3. The exhaust gas purification catalyst device according to claim 1 or 2, wherein:
the amount of ceria in the upstream side lower coating layer is 10 g/L or lower per 1 L of the upstream side lower coating layer-forming part of the substrate, and
the amount of ceria in the downstream side upper coating layer is 10 g/L or lower per 1 L of the downstream side upper coating layer-forming part of the substrate.

4. The exhaust gas purification catalyst device according to any one of claims 1 to 3, wherein:
the upstream side upper coating layer and the downstream side lower coating layer each include Pd,
the amount of Pd in the upstream side upper coating layer per 1 L of the upstream side upper coating layer-forming part of the substrate
is at least 2.0 times the amount of Pd in the downstream side lower coating layer per 1 L of the downstream side lower coating layer-forming part of the substrate.

5. The exhaust gas purification catalyst device according to any one of claims 1 to 4, wherein the total length of the upstream side lower coating layer and the downstream side upper coating layer is at least 80% of the length of the substrate.

6. The exhaust gas purification catalyst device according to any one of claims 1 to 5, wherein near the edges on the exhaust gas flow upstream side, the upstream side upper coating layer has no region that is directly disposed on the substrate without contacting the upstream side lower coating layer.

7. The exhaust gas purification catalyst device according to any one of claims 1 to 6, wherein the length of the upstream side coating layer is 20% to 50% of the length of the substrate.

8. The exhaust gas purification catalyst device according to any one of claims 1 to 7, wherein the coating amount of the upstream side coating layer is 240 g/L or lower per 1 L of the upstream side coating layer-forming part of the substrate.

9. The exhaust gas purification catalyst device according to any one of claims 1 to 8, wherein the coating amount of the upstream side upper coating layer is 160 g/L or lower per 1 L of the upstream side upper coating layer-forming part of the substrate.
